Europäisches Patentamt

European Patent Office

Office européen des brevets

(11) Numéro de publication : **0 536 271 B1**

# (12) FASCICULE DE BREVET EUROPEEN

(45) Date de publication du fascicule du brevet :
20.04.94 Bulletin 94/16

(51) Int. Cl.$^5$ : **G01N 25/32**

(21) Numéro de dépôt : **91912569.0**

(22) Date de dépôt : **27.06.91**

(86) Numéro de dépôt international :
**PCT/FR91/00516**

(87) Numéro de publication internationale :
**WO 92/00519 09.01.92 Gazette 92/02**

(54) **CAPTEUR-DETECTEUR DE LA PRESENCE DE MATIERES VOLATILES ET GAZ IMBRULES DANS UN FLUX OU UN MILIEU GAZEUX.**

(30) Priorité : **27.06.90 FR 9008310**

(43) Date de publication de la demande :
**14.04.93 Bulletin 93/15**

(45) Mention de la délivrance du brevet :
**20.04.94 Bulletin 94/16**

(84) Etats contractants désignés :
**AT BE CH DE DK ES GB IT LI LU NL SE**

(56) Documents cités :
**DE-A- 2 254 416**
**DE-B- 1 006 630**
**DE-C- 921 285**
**FR-A- 1 325 724**
**GB-A- 812 607**
**US-A- 2 052 181**

(73) Titulaire : **FONDIS, S.A.**
**Z.I. de Vieux Thann**
**F-68800 Thann (FR)**

(72) Inventeur : **HAAS, Frédéric**
**62, rue Jean-Martin**
**F-68200 Mulhouse (FR)**
Inventeur : **PRADO, Gilles**
**22, rue du Belacken**
**F-68290 Rimbach-près-Masevaux (FR)**
Inventeur : **RICHARD, Robert**
**7, rue des Pèlerins**
**F-68800 Thann (FR)**

(74) Mandataire : **Metz, Paul**
**Cabinet METZ PATNI, 63, rue de la Ganzau**
**F-67100 Strasbourg (FR)**

## Description

La présente invention se rapporte à un capteur de détection et de mesure de matières volatiles et gaz combustibles imbrûlés notamment pour appareil de chauffage et moteur thermique ainsi qu'à un capteur de détection et de mesure destiné à mesurer la quantité de gaz combustibles présente dans un milieu gazeux statique ou en mouvement.

Elle se rapporte également au procédé de fabrication ou de confection d'un tel capteur de détection et de mesure de la présence et de la quantité d'imbrûlés.

Les combustions de divers produits dans les appareils de chauffage et moteurs ne présentent pas toujours la perfection et le degré de propreté souhaités, en raison bien souvent des mauvaises conditions de fonctionnement, mais aussi de la qualité du combustible ou du carburant. Pour y remédier, on utilise des cellules catalytiques, appelées communément catalyseurs, placées dans le flux des gaz et fumées de combustion ou d'échappement. Celles-ci coûtent cher et ne présentent pas toujours les qualités de fiabilité et d'efficacité attendues notamment en usage intensif. De plus, leur durée de vie s'avère limitée et peut être écourtée en raison de leur fragilité.

Par ailleurs, ces catalyseurs ne permettent que de débarrasser les émanations de combustion des résidus gazeux combustibles qu'elles transportent. Ils ne permettent pas, par contre, de remédier à des défauts ou à une insuffisance de combustion ou de carburation en vue de rendre l'une et l'autre plus complète, c'est à dire plus propre du point de vue environnement.

Malheureusement, ces catalyseurs ne peuvent suffir seuls à corriger les mauvaises conditions de combustion ou de carburation car leur rôle se montre purement statique sans aucune action en amont.

Or, pour une maîtrise totale de la combustion ou de la carburation, il faut pouvoir ramener, chaque fois que nécessaire, les paramètres dans la zone de fonctionnement idéal du point de vue pollution.

Ceci nécessite une surveillance permanente des conditions de combustion ou de carburation. Cette maîtrise peut résulter, dans une large mesure, de la surveillance constante de la teneur en matières imbrûlées des fumées et gaz de combustion ou d'échappement.

Dans le domaine du chauffage, on dispose, actuellement, de moyens suffisants pour assurer la combustion presque totale des matières volatiles inflammables imbrûlées issues d'une combustion dans un foyer.

Parmi ceux-ci, le déposant s'est intéressé plus particulièrement à la postcombustion en tant que moyen particulièrement intéressant d'épuration des gaz et fumées issus du foyer d'un appareil de chauffage notamment au bois.

Il s'agit de l'invention décrite dans le brevet européen EP n° 0322330 ou US n° 4,976,207 au nom du déposant.

Selon le dispositif imaginé, la postcombustion est déclenchée dans une chambre de postcombustion attenante au foyer par une énergie extérieure, par exemple électrique, au moment de la production des imbrûlés, c'est-à-dire le plus tôt possible après le démarrage du feu. Ceci doit se produire au départ, mais aussi à chaque réactivation du feu par le rechargement en combustible, par exemple en bois.

Pour offrir à l'utilisateur un fonctionnement pratique sans intervention systématique de sa part, il faut pouvoir déclencher automatiquement la postcombustion à partir d'un taux prédéterminé de gaz combustibles existant dans les émanations volatiles d'un foyer.

On connaît déjà des capteurs de matières volatiles et gaz imbrûlés dans un flux gazeux résultant d'une combustion.

Le brevet allemand DE n° 2254416 décrit un capteur de détection et de mesure de matières volatiles imbrûlées et gaz présents dans le flux gazeux d'un moteur à combustion. Ce capteur comprend deux thermocouples dont la partie sensible de chacun d'eux est plongée dans le même milieu à surveiller ou à mesurer. L'un des thermocouples est un thermocouple neutre de référence et l'autre, un thermocouple de détection et de mesure présentant une activité catalytique.

Le brevet britannique GB n° 812607 décrit un système d'oxydation ou de réduction de l'atmosphère dans une chambre à combustion, système comprenant deux termocouples qui sont connectés en opposition et présentent une borne de sortie sur la liaison électrique commune.

Le brevet français FR n° 1325724 décrit un dispositif pour la détection et le dosage d'un gaz combustible. Ce dispositif comprend aussi deux thermocouples.

La présente invention a pour but d'apporter à tout ensemble d'épuration des fumées et gaz d'une combustion ou d'un échappement une surveillance constante de la production par la combustion de matières volatiles et gaz imbrûlés.

Elle a également pour but d'agir sur les conditions de combustion pour la rendre plus propre au sens de la préservation de l'environement.

A cet effet, on proposé un capteur de détection et de mesure permettant de surveiller et de commander un ensemble de postcombustion et d'agir simultanément sur la combustion en vue de la rendre plus propre tout en maintenant constamment les conditions d'un fonctionnement optimal.

Pour ce faire, le capteur de détection et de mesure selon l'invention est caractérisé en ce qu'il se compose de deux thermocouples de même nature montés électriquement en opposition dont la partie sensible est plongée dans le même milieu à surveiller ou à mesurer, l'un des thermocouples étant un thermocouple de référence, l'autre un thermocouple de détection et de mesure présentant, soit une activité catalytique, soit inséré dans une chambre de détection et de mesure présentant une activité catalytique.

D'importants avantages découlent du capteur de détection et de mesure selon l'invention tels que ceux précisés ci-dessus :

. simplicité de fabrication et modicité du prix de revient des thermocouples ;

. facilité d'intégration du détecteur dans une chambre de postcombustion ;

. la grande sensibilité permet de diminuer notablement le seuil de détection ;

. cette amélioration notable de la sensibilité permet l'exploitation électronique efficace dans un montage de régulation ;

. ce montage de régulation dispose simultanément d'une indication de la température ambiante fournie par le thermocouple de référence et permet sans l'aide d'un autre capteur de gérer entièrement la post-combustion d'un appareil de chauffage ou d'un moteur thermique ;

. la confection du thermocouple de détection s' avère notablement simple car il suffit, comme le thermocouple de référence, de l'enduire d'une matière de protection ;

. il suffit de le dégager de son support et de le sortir de la chambre pour remplacer le thermocouple de détection ;

. le fonctionnement de détection par rayonnement apporte encore une meilleure sensibilité et une plus grande rapidité de réponse ;

. cette association de moyens permet de réaliser un blindage efficace et continu sur toutes les parties exposées des fils électriques de liaison en vue de réduire le bruit de fond ;

. parmi les nombreuses applications, on peut envisager l'utilisation du capteur de détection et de mesure-détecteur en cellule de mesure dans le cadre de l'analyse d'un échantillon gazeux ;

. on peut également prévoir la surveillance d'une atmosphère en teneur de gaz imbrûlés.

Les caractéristiques techniques et d'autres avantages de l'invention sont consignés dans la description qui suit, effectuée à titre d'exemple non limitatif sur un mode d'exécution en référence aux dessins accompagnants dans lesquels :

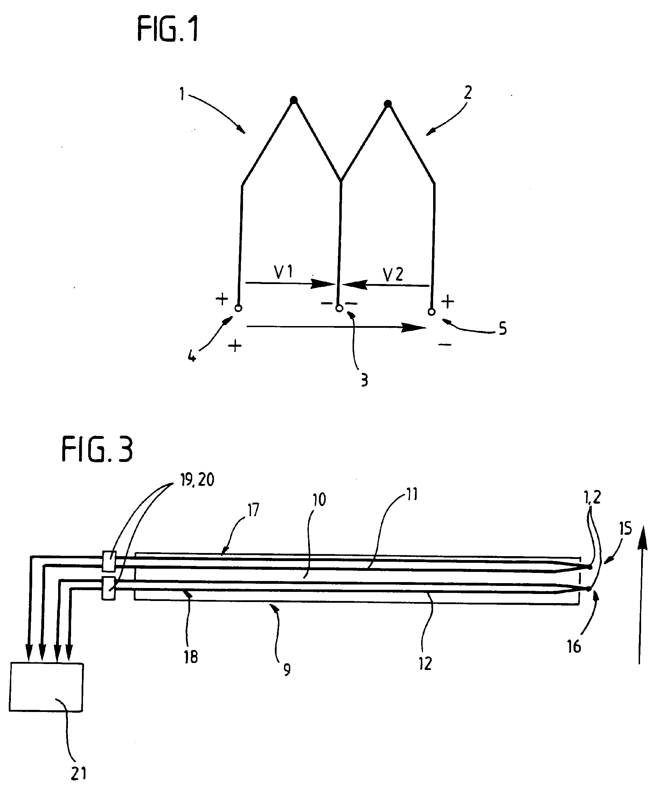

. la figure 1 est un schéma de principe montrant la façon de relier électriquement les thermocouples entre eux ;

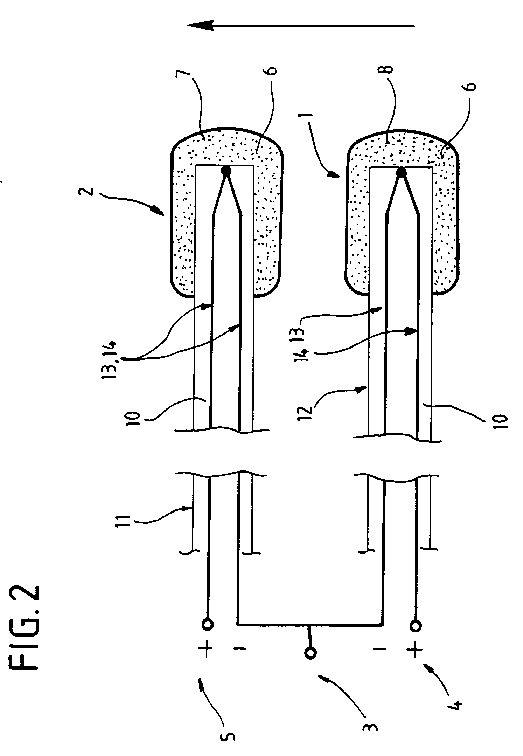

. la figure 2 est une vue agrandie en coupe longitudinale des thermocouples ;

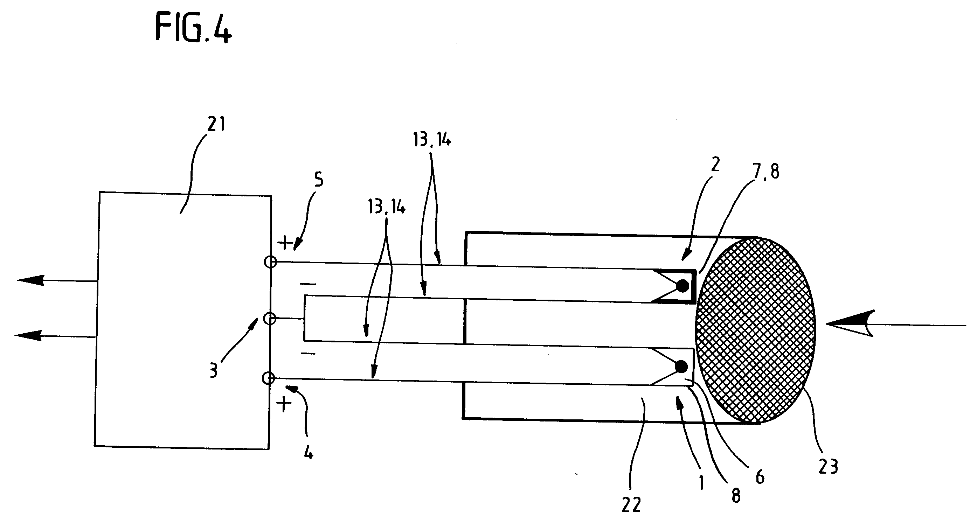

. la figure 3 est une représentation simplifiée en coupe longitudinale illustrant un premier type de détecteur en forme de canne ;

. la figure 4 est une représentation en perspective simplifiée illustrant un deuxième type de détecteur à structure traversante ;

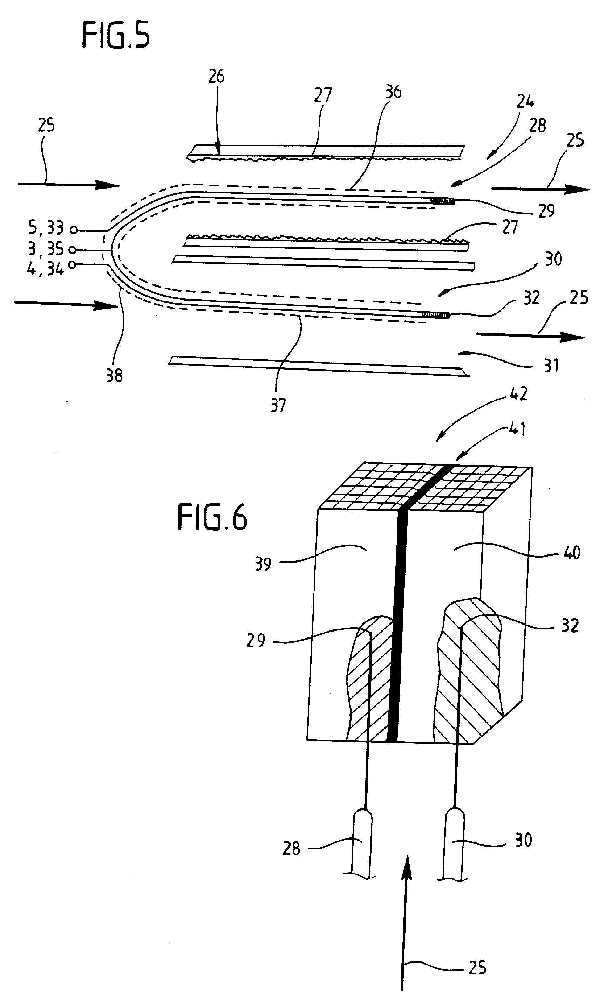

. la figure 5 est une vue schématique en coupe longitudinale du capteur de détection et de mesure d'imbrûlés à deux thermocouples selon l'invention dans une version à chambre de détection catalytique ;

. la figure 6 est une vue schématique en perspective d'une forme de réalisation du capteur de détection et de mesure selon une variante utilisant des cellules en nids d'abeille;

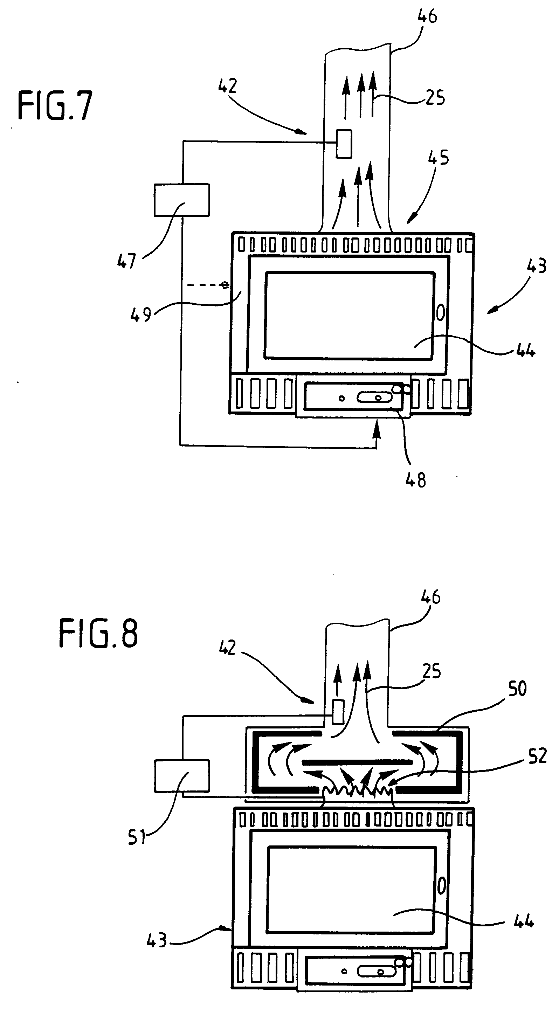

. la figure 7 est un schéma montrant le principe d'utilisation dans un appareil de chauffage sans chambre de postcombustion ;

. la figure 8 est un schéma montrant l'utilisation dans un appareil de chauffage avec chambre de postcombustion ;

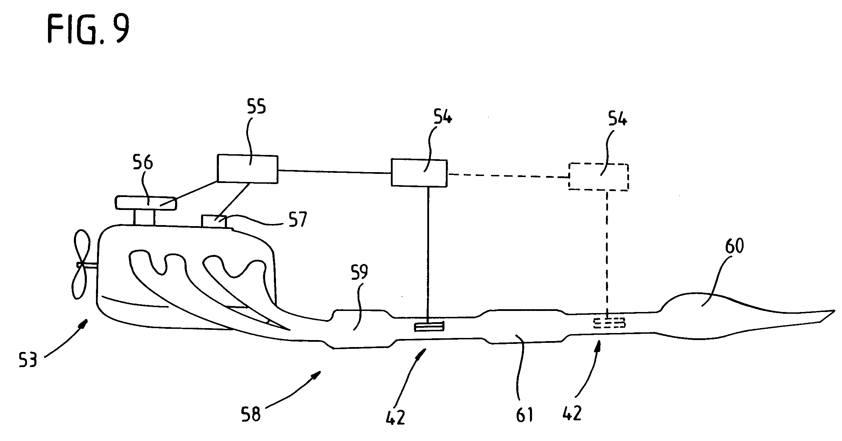

. la figure 9 est un schéma illustrant le principe d'utilisation sur un moteur à combustion interne.

La présente invention procède de l'idée générale inventive qui consiste à former un capteur de détection et de mesure d'imbrûlés à l'aide de deux thermocouples de même nature montés électriquement en opposition et disposés dans le milieu à surveiller ou à mesurer, l'un à proximité de l'autre, en vue de détecter et de mesurer une teneur en matières et en gaz combustibles imbrûlés puis de commander des moyens d'amélioration de la combustion et d'épuration de l'air par la combustion forcée de ceux-ci et notamment de déclencher la postcombustion permettant de brûler pratiquement tous les produits volatiles imbrûlés issus de la combustion.

L'un des thermocouples est le thermocouple de détection et de mesure, l'autre le thermocouple de référence.

Comme indiqué, l'invention se rapporte à un capteur de détection et de mesure utilisant les deux thermocouples précédents en association.

Plus particulièrement, le thermocouple de détection présente une activité catalytique ou est inséré dans une chambre présentant une activité catalytique alors que le thermocouple de référence est simplement plongé dans le milieu ou inséré dans une chambre neutre.

On décrira ci-après les caractéristiques des thermocouples utilisés pour former le capteur de détection et de mesure et quelques exemples de réalisations et d'applications.

Comme indiqué, le détecteur est constitué de deux thermocouples 1 et 2 respectivement de référence et de mesure présentant individuellement à leurs bornes une tension $V_1$ et $V_2$.

Les thermocouples sont montés électriquement en opposition. Les bornes négatives de chacun d'entre eux sont, par exemple, reliées électriquement entre elles pour constituer une borne intermédiaire commune 3, alors que les bornes extrêmes forment les pôles du générateur résultant présentant un pôle positif 4 et un pôle négatif 5 ou inversement selon la grandeur et le signe de la différence des tensions individuelles produites :

$$U = V_1 - V_2.$$

Les thermocouples utilisés sont notamment des thermocouples classiques dits de type K ou de type S.

Les deux thermocouples constituant le capteur de détection et de mesure selon l'invention sont de préférence de même nature.

Par exemple, les thermocouples de type S sont fabriqués de la même façon à partir d'un fil de platine et d'un fil de platine-rhodium soudés par exemple à l'arc électrique en bain de mercure.

Dans ce type de thermocouple, le thermocouple de détection et de mesure 2 étant lui-même de nature catalytique pourrait être laissé nu. Il ne comporte qu'une simple protection.

Selon cette variante, le thermocouple de référence de même nature que celui ci-dessus, est enduit ou recouvert d'une couche de protection réfractaire neutralisante à l'égard de l'activité catalytique, sous la forme d'une pâte réfractaire résistant aux hautes températures, par exemple une pâte composée de magnésium, d'aluminium et de silice.

Par enduction, il faut comprendre toute technique permettant d'appliquer une matière ou un matériau sur un support : dépôt, pulvérisation ou toute autre technique connue.

Pour des thermocouples de nature non catalytique, par exemple du type K, le thermocouple de référence peut être enduit d'un revêtement passif d'aluminium 6, le thermocouple de détection et de mesure est enduit du même revêtement passif recouvert d'une couche d'une matière catalytique 7 recouverte elle même, le cas échéant, d'un revêtement protecteur neutre 8.

Concernant le choix de la matière d'enduction, on peut citer, à titre d'exemple, certains métaux rares et leurs alliages, tels que le platine, le palladium et le rhodium et toutes les matières ou matériaux équivalents.

On décrira maintenant diverses variantes du capteur de détection et de mesure selon lesquelles le thermocouple de détection et de mesure présente une activité catalytique.

En se référant à la figure 3, une première forme de réalisation du détecteur selon l'invention concerne une canne 9 formée d'une enveloppe extérieure dans laquelle sont immobilisées, prises dans un remplissage 10, par exemple de la poudre d'alumine, des gaines intérieures 11 et 12 destinées à la protection des fils des thermocouples 13 et 14 dont les parties sensibles 15 et 16 font saillie de l'extrémité avant de la canne. Les deux groupes 17 et 18 de fils de connexion aboutissent chacun à un bornier 19, 20 duquel partent les fils de raccordement à une interface électrique 21.

Cette extrémité de la canne est plongée dans le milieu à surveiller, à savoir, dans le cas typique de l'application à un flux de gaz et fumées de combustion, notamment à l'intérieur de la chambre de postcombustion.

Ce flux est transversal et matérialisé par une flèche.

Dans une variante de réalisation représentée sur la figure 4, le capteur de détection et de mesure comprend une cellule 22 dans laquelle sont placés les deux thermocouples, cellule protégée à l'une de ses extrémités par une grille 23. La cellule peut être ouverte ou fermée à son extrémité opposée.

Les thermocouples sont montés en opposition avec borne commune et raccordés à l'interface électrique 21.

Le sens du flux est matérialisé par une flèche.

On décrira maintenant, en référence aux figures 5 et 6, les formes de réalisation selon lesquelles le thermocouple de détection et de mesure ne présente plus d'activité catalytique et se trouve inséré dans une chambre tubulaire ou un conduit enduit intérieurement d'une couche d'une matière présentant une activité catalytique.

Le capteur de détection et de mesure selon cette variante se compose d'une chambre longitudinale 24 de détection-catalyse, par exemple de forme générale tubulaire ou en conduit, traversée par un flux de gaz matérialisé par les flèches 25 issus de la combustion ou présents dans le circuit de préparation d'un appareil de mesure ou d'une atmosphère présumée être chargée de gaz à l'état combustible.

Cette chambre 24 est revêtue sur sa surface latérale intérieure 26 directement ou sur une sous couche de préparation, d'un dépôt ou d'une couche 27 d'un produit ou d'une matière présentant une activité catalytique à l'égard des matières volatiles ou gaz imbrûlés à surveiller, par exemple spécifiques du combustible ou du carburant utilisé, tel que par exemple le platine, le palladium, le rhodium pour la combustion du bois, ou des hydrocarbures.

Cette chambre 24 est occupée par un premier thermocouple appelé thermocouple de détection et de mesure 28. Ce thermocouple est enduit ou revêtu d'une simple protection mécanique 29 et, selon le cas, avec interposition d'une matière intermédiaire.

Un deuxième thermocouple, appelé thermocouple de référence 30, de préférence de même matière que le premier, est placé dans le même milieu ambiant à l'extérieur de la chambre de détection 24 dans le flux 25 des gaz, c'est-à-dire dans le même milieu gazeux que le thermocouple de détection 28. Pour des raisons mécaniques, il est préférable de l'insérer dans une chambre neutre de référence 31, c'est-à-dire sans revêtement catalytique, par exemple de même forme générale tubulaire que la première et parallèle à celle-ci. Ce deuxième thermocouple 30 est enduit d'une couche de protection mécanique et thermique 32 ou, selon le cas, d'une sous-couche neutralisante.

A titre d'exemple, on peut citer les couples de métaux susceptibles de convenir pour la constitution des thermocouples ci-dessus. Il s'agit de platine-platine rhodié, chromel-alumel, fer-constantan, nickel-cuivre.

Les deux thermocouples 28 et 30 sont par exemple identiques et montés électriquement en opposition. Les différents points ou bornes électriques de sortie sont accessibles ou utilisables pour des mesures directes à partir de chaque thermocouple pris individuellement.

Il s'agit de deux bornes distinctes 33 et 34 et d'une borne commune 35 correspondant à la branche de liaison entre les deux bornes distinctes 33 et 34.

Par exemple, le thermocouple de référence utilisé isolément comme capteur thermique fournira la valeur de la température du flux gazeux ambiant, indication utile pour connaître la température de la combustion et l'allure de chauffe ou de fonctionnement.

On pourra aussi commander la post-combustion et gérer l'ensemble à partir des seules indications fournies par le capteur selon l'invention.

Les liaisons électriques entre les thermocouples sont protégées des parasites électriques et du bruit de fond par un blindage individuel 36 et 37 et par un blindage de sortie 38.

Ces liaisons ainsi protégées ne constituant plus des éléments susceptibles de récupérer des parasites ou du bruit de fond permettent d'améliorer notablement la sensibilité, c'est-à-dire le seuil de détection.

Le thermocouple de détection 28 est exploité comme un détecteur de présence de matières et gaz à l'état combustible c'est-à-dire imbrûlés dans le cas d'applications à une chambre de combustion et à un moteur thermique .

Pour ce faire, un circuit électrique approprié de détection les utilise comme éléments actifs de caractéristiques variables à partir d'un seuil de détection.

Selon une variante perfectionnée, les chambres de détection 24 et de référence 31 peuvent être constituées par l'un des canaux de cellules en nids d'abeille, respectivement une cellule catalytique 39 et une cellule neutre 40 comme représenté sur la figure 3.

Ces cellules sont individuelles, indépendantes et traversantes pour le flux des gaz et fumées, flux dirigé selon les canneaux, et matérialisé par une flèche. La matière de ces cellules est de type réfractaire.

La cellule catalytique 39 présentera un revêtement ou une enduction d'une matière catalytique qui lui confère une fonction de catalyseur. Par contre, la cellule neutre 40 est laissée brute, par exemple en céramique sans finition.

Les deux cellules sont juxtaposées et solidarisées par une de leurs faces, par exemple par l'intermédiaire d'une pâte réfractaire 41, formant joint et constituant une cellule composite double de détection 42.

De façon non limitative, les exemples d'application se concentrent autour des appareils de chauffage et chaudières, puis des moteurs à combustion interne, puis des appareils de surveillance, d'analyse et de mesure de la teneur d'une atmosphère en matières volatiles ou gaz imbrûlés et de façon plus générale tout gaz combustible.

On décrira ci-après trois exemples caractéristiques d'applications non limitatifs à l'aide des figures 7, 8 et 9, étant bien entendu que toutes les autres applications possibles entrent également dans le champ de la protection.

La figure 7 montre un appareil de chauffage comprenant un foyer fermé 43 formant une chambre de combustion 44 de laquelle s'échappent les gaz et fumées de combustion à travers une boite à fumée 45, puis un conduit de cheminée 46.

Le capteur de détection et de mesure selon l'invention, utilisé par exemple dans sa version cellule composite 42, se place à la sortie d'une boîte à fumées 45 prologée par un conduit 46 d'évacuation des fumées. Il est relié à une interface de commande 47 pour action sur les moyens de réglage de la combustion, par exemple sur l'admission d'air primaire 48 et, le cas échéant, également sur l'admission d'air secondaire 49 (liaison en pointillés).

La figure 6 concerne la commande en fonctionnement d'une chambre de postcombustion 50 placée en aval sur le circuit des gaz et fumées issus de la combustion, par exemple sur le même type d'appareil de chauffage à foyer fermé 43 et à chambre de combustion 44.

La cellule composite double de détection 42 constituant le capteur de détection et de mesure selon l'invention est placée à la sortie de chambre de postcombustion. Il commande, par l'intermédiaire d'une interface appropriée 51, des moyens 52 de chauffage de l'air neuf admis dans la chambre de postcombustion 50 à chaque fois que le taux d'imbrûlés dépassant une limite prédéterminée implique une décision de déclenchement de la post-combustion.

Les moyens essentiels nécessaires pour la régulation en propreté de la combustion interne d'un moteur thermique 53 sont représentés sur la figure 7.

Sur cette figure, on distingue la cellule composite double de détection 42 et une interface propre d'exploitation 54 qui agit sur un module 55 de gestion globale du fonctionnement du moteur par commande directe ou indirecte de la richesse du mélange ou séparément de la quantité d'air sur une entrée d'air 56 d'une part, et de la quantité de carburant sur un bloc d'injection 57 d'autre part.

Bien entendu, la cellule composite double de détection 42 constituant le capteur de détection et de mesure selon l'invention sera placée dans l'ensemble d'échappement 58 du moteur 53 à pot de détente 59 et d'échappement 60. Elle le sera en amont ou en aval d'un catalyseur 61 (position en pointillés), lorsque celui-ci existe, selon le degré de régulation souhaité, mais de préférence en amont avec un seuil de détection différent, pour arriver simultanément à une meilleure régulation de propreté de combustion, et à ne pas surcharger le catalyseur 61 ou à permettre d'en diminuer les capacités ou les dimensions.

D'autres applications en surveillance d'atmosphère, d'ambiance ou autres ainsi que dans le circuit de mesure d'un appareil d'analyse d'un échantillon gazeux sont envisagées.

Il y a lieu de remarquer ici qu'aussi bien dans le cadre de l'application aux appareils de chauffage que de l'application aux moteurs thermiques, la gestion de la propreté de la combustion quant à la présence d'imbrûlés, est totalement remplie à partir des seules indications provenant du capteur de détection et de mesure selon l'invention.

L'invention se rapporte également à la confection d'un capteur de détection et de mesure selon la méthode suivante.

On revêt ou on enduit, par un procédé connu, la surface latérale intérieure d'une chambre tubulaire traversée par le flux des gaz issus de combustion d'une couche ou d'un dépôt d'un matériau ou d'une matière à activité catalytique, puis l'on insère à l'intérieur de cette chambre un thermocouple de détection en disposition longitudinale, l'on monte ce thermocouple électriquement en opposition avec un autre thermocouple dit de référence, plongé dans le flux des gaz issus de combustion dans une chambre parallèle neutre, on blinde les liaisons sensibles de raccordement électrique et on sort trois points ou bornes de branchement électrique correspondant aux deux extrémités libres des thermocouples et au point milieu de liaison commune.

La chambre de détection peut également être formée par le canal d'une cellule d'un catalyseur en nids d'abeille revêtue ou enduite entièrement, par un procédé connu, d'une matière à activité catalytique du type sel de métaux rares tels que le platine, le palladium, le rhodium , alors que le thermocouple de référence est introduit dans une chambre neutre constituée par un canal d'une cellule en nids d'abeille non revêtue ou enduite d'une matière à activité catalytique.

## Revendications

1. Capteur de détection et de mesure des matières volatiles et gaz imbrûlés présents dans le flux gazeux de sortie d'une chambre de combustion d'un appareil de chauffage ou de l'échappement d'un moteur à combustion interne ou gaz combustibles présents dans une enceinte, une atmosphère, un appareil ou dans un milieu quelconque utilisant deux thermocouples dont un thermocouple est un thermocouple neutre de référence et l'autre un thermocouple de détection et de mesure, caractérisé en ce qu'il se compose d'une chambre de détection (24) traversée par un flux gazeux (25) et revêtue sur sa surface latérale intérieure d'une couche (27) d'une matière ou d'un matériau catalytique, occupée intérieurement par un thermocouple de détection et de mesure (28) protégé par une matière neutre, et en ce que celui-ci est monté électriquement en opposition avec un thermocouple de référence (30) protégé par une matière neutre, disposé hors de la chambre de détection (24) mais dans le flux gazeux (25), lesdits thermocouples étant raccordés électriquement à une borne de sortie commune (35) correspondant à un point de la liaison électrique entre les deux thermocouples montés en opposition.

2. Capteur selon la revendication 1, caractérisé en ce que la chambre de détection (24) est tubulaire.

3. Capteur selon les revendications 1 ou 2, caractérisé en ce que le thermocouple de référence (30) est disposé dans une chambre adjacente.

4. Capteur selon les revendications 1 ou 2, caractérisé en ce que la chambre tubulaire de détection (24) est revêtue d'une matière catalytique en métaux rares tels que platine, palladium ou rhodium.

5. Capteur selon l'une quelconque des revendications précédentes, caractérisé en ce que les thermocouples (28) et (30) sont placés en disposition longitudinale par rapport aux chambres.

6. Capteur selon la revendication 3, caractérisé en ce que la chambre adjacente est de forme identique à la chambre de détection (24).

7. Capteur selon les revendications 3 ou 6, caractérisé en ce que la chambre adjacente est parallèle à la chambre de détection (24).

8. Capteur selon l'une quelconque des revendications précédentes, caractérisé en ce que la chambre de détection (24) est un canal d'une cellule catalytique (39) à plusieurs canaux.

9. Capteur selon l'une quelconque des revendications précédentes, caractérisé en ce que la chambre de détection est un canal d'une cellule catalytique (39) en nids d'abeille.

10. Capteur selon les revendications 7 ou 8, caractérisé en ce que le thermocouple de référence (30) est placé dans un canal d'une cellule neutre (40) adjacente à la cellule catalytique (39) pour former une cellule composite double de détection (42).

11. Procédé de confection d'une cellule de capteur-détecteur, caractérisé en ce que l'on enduit la surface latérale intérieure d'une chambre tubulaire, traversée par le flux des gaz, d'une couche ou d'un dépôt d'un matériau ou d'une matière à activité catalytique, que l'on insère à l'intérieur de cette chambre un thermocouple de détection en disposition transversale ou longitudinale, que l'on monte ce thermocouple électriquement en opposition avec un autre thermocouple dit de référence, plongé dans le flux gazeux occupant une chambre parallèle neutre.

12. Application du capteur selon l'invention à la sortie d'une chambre de postcombustion d'un appareil de chauffage.

13. Application du capteur selon l'invention au circuit d'échappement d'un moteur à combustion interne.

**Patentansprüche**

1. Sensor zum Nachweis und Messen von flüchtigen Stoffen und nicht-verbrannten Gasen in einem Gasstrom am Ausgang einer Verbrennungskammer einer Heizvorrichtung oder Auspuffanlage eines Verbrennungsmotors oder von brennbarem Gas in einem Gehäuse, in der Atmosphäre, in einer Vorrichtung oder in einer beliebigen Umgebung mit zwei Thermoelementen, wobei ein Thermoelement ein neutrales Bezugsthermoelement und das andere ein Meß- und Nachweisthermoelement ist, gekennzeichnet durch eine von einem Gasstrom (25) durchströmte Nachweiskammer (24), die auf ihrer Innenmantelfläche von einer Schicht (27) aus einer katalytischen Substanz oder einem katalytischen Material überzogen ist und im Inneren ein durch eine neutrale Substanz geschütztes Thermoelement (28) zum Nachweis und Messen aufweist, wobei dieses dem mit einer neutralen Substanz geschützen Bezugsthermoelement (30), welches außerhalb der Nachweiskammer (24) aber im Gasstrom (25) angeordnet ist, elektrisch gegengeschaltet ist, und die Thermoelemente über eine gemeinsame Ausgangsklemme (35) elektrisch miteinander verbunden sind, welche einem elektrischen Anschlußpunkt zwischen den zwei gegengeschalteten Thermoelementen entspricht.

2. Sensor nach Anspruch 1, dadurch gekennzeichnet, daß die Nachweiskammer (24) rohrförmig ist.

3. Sensor nach einem der Ansprüche 1 oder 2, dadurch gekennzeichnet, daß das Bezugsthermoelement (30) in einer benachbarten Kammer angeordnet ist.

4. Sensor nach einem der Ansprüche 1 oder 2, dadurch gekennzeichnet, daß die röhrenförmige Nachweiskammer (24) mit einer Katalysatorschicht aus den Seltenen Metallen, wie Platin, Palladium oder Rhodium, überzogen ist.

5. Sensor nach einem der vorangehenden Ansprüche, dadurch gekennzeichnet, daß die Thermoelemente (28,30) in bezug auf die Kammern in Längsrichtung angeordnet sind.

6. Sensor nach Anspruch 3, dadurch gekennzeichnet, daß die benachbarte Kammer gleich der Nachweiskammer (24) geformt ist.

7. Sensor nach Anspruch 3 oder 6, dadurch gekennzeichnet, daß die benachbarte Kammer parallel zur Nachweiskammer (24) angeordnet ist.

8. Sensor nach einem der vorangehenden Ansprüche dadurch gekennzeichnet, daß die Nachweiskammer (24) ein Kanal einer katalytischen Zelle (39) aus mehreren Kanälen ist.

9. Sensor nach einem der vorangehenden Ansprüche, dadurch gekennzeichnet, daß die Nachweiskammer ein Kanal einer wabenförmigen katalytischen Zelle (39) ist.

10. Sensor nach einem der Ansprüche 7 oder 8, dadurch gekennzeichnet, daß das Bezugsthermoelement (30) in einem Kanal einer neutralen Zelle (40) angeordnet ist, die der katalytischen Zelle (39) benachbart ist, um eine zusammengesetzte Doppelnachweiszelle (42) zu bilden.

11. Verfahren zur Herstellung einer Zelle eines Nachweis-Sensors, dadurch gekennzeichnet, daß die Innenmantelfläche einer von einem Gasstrom durchströmten röhrenförmigen Kammer mit einer Schicht oder einem Überzug aus einer Substanz oder einem Material mit katalytischer Wirkung überzogen wird, daß in das Innere dieser Kammer ein Nachweisthermoelement in Längs- oder Querrichtung eingeführt wird und daß dieses Thermoelement elektrisch einem anderen Thermoelement, insbesondere einem Bezugsthermoelement, gegengeschaltet wird, wobei letzteres in den Gasstrom in einer parallelen neutralen Kammer eintaucht.

12. Verwendung eines erfindungsgemäßen Sensors am Ausgang einer Verbrennungskammer einer Heizvorrichtung.

13. Verwendung eines erfindungsgemäßen Sensors in der Leitung einer Auspuffanlage eines Verbrennungsmotors.

**Claims**

1. Sensor for detecting and measuring volatile matter and unburnt gases present in the outlet gas stream from a combustion chamber of a heating apparatus or the exhaust of an internal combustion engine or combustible gases present in a chamber, an atmosphere, an apparatus or in any medium using two thermocouples of which one thermocouple is a neutral, reference thermocouple and the other is a detecting and measuring thermocouple, characterised in that it consists of a detection chamber (24) through which a gas stream (25) passes and which is coated on its inner lateral surface with a layer (27) of catalytic material or substance, the interior of the chamber being occupied by a detecting and measuring thermocouple (28) protected by a neutral material; and in that the detecting and measuring thermocouple (28) is mounted electrically opposite a reference thermocouple (30) protected by a neutral material, disposed outside the detection chamber (24) but in the gas stream (25), said thermocouples being connected electrically to a common outlet terminal (35) corresponding to a point of the electrical connection between the two thermocouples mounted opposite one another.

2. Sensor according to Claim 1, characterised in that the detection chamber (24) is tubular.

3. Sensor according to Claim 1 or Claim 2, characterised in that the reference thermocouple (30) is disposed in an adjacent chamber.

4. Sensor according to Claim 1 or Claim 2, characterised in that the tubular detection chamber (24) is coated with a catalytic material consisting of rare metals such as platinum, palladium or rhodium.

5. Sensor according to any one of the preceding claims, characterised in that the thermocouples (28) and (30) are disposed in a longitudinal arrangement relative to the chambers.

6. Sensor according to Claim 3, characterised in that the shape of the adjacent chamber is identical to the detection chamber (24).

7. Sensor according to Claim 3 or Claim 6, characterised in that the adjacent chamber is parallel to the detection chamber (24).

8. Sensor according to any one of the preceding claims, characterised in that the detection chamber (24) is a channel of a catalytic cell (39) having a plurality of channels.

9. Sensor according to any one of the preceding claims, characterised in that the detection chamber is a channel of a honeycombed catalytic cell (39).

10. Sensor according to Claim 7 or 8, characterised in that the reference thermocouple (30) is disposed in a channel of a neutral cell (40) adjacent the catalytic cell (39) so as to form a double composite detection cell (42).

11. Process for producing a sensor-detector cell, characterised in that the inner lateral surface of a tubular chamber through which the gas stream passes is coated with a layer or a deposit of a catalytically active material; in that a detection thermocouple arranged transversely or longitudinally is disposed inside this chamber; and in that this thermocouple is mounted electrically opposite a further, so-called reference thermocouple immersed in the gas stream occupying a neutral parallel chamber.

12. Application of the sensor according to the invention at the outlet of a post-combustion chamber of a heating apparatus.

13. Application of the sensor according to the invention to the exhaust circuit of an internal combustion engine.

# FIG.1

# FIG.3

FIG. 2

EP 0 536 271 B1

FIG.4

# FIG.5

# FIG.6

FIG.7

FIG.8

FIG.9